# FASCICULE DE BREVET EUROPEEN

(11) **EP 0 699 148 B1**
(45) Date de publication et mention de la délivrance du brevet: **20.11.1996**
(21) Numéro de dépôt: 94914440.6
(22) Date de dépôt: 25.04.1994
(51) Int. Cl.: B60T 8/48

(54) **CIRCUIT HYDRAULIQUE A CAPACITE FORMANT DISTRIBUTEUR**
HYDRAULISCHER KREISLAUF MIT ALS VERTEILER WIRKENDEM BEHÄLTER
HYDRAULIC CIRCUIT WITH RESERVOIR SERVING AS DISTRIBUTOR

(30) Priorité: 25.05.1993 FR 9306181
(43) Date de publication de la demande: 06.03.1996
(73) Titulaire: ALLIEDSIGNAL EUROPE SERVICES TECHNIQUES, 93700 Drancy (FR)
(72) Inventeur: LEBRET, Pierre, F-78150 Le Chesnay (FR)
(74) Mandataire: Bentz, Jean-Paul
(86) Numéro de dépôt international: FR9400466
(87) Numéro de publication internationale: WO9427849

(56) Documents cités:
- EP-A- 0 539 899
- WO-A-92/16399
- DE-A- 3 940 177
- DE-A- 4 119 142
- DE-A- 4 205 041
- JP-A- 5 065 057

## Description

La présente invention concerne un circuit hydraulique de freinage, destiné à équiper un véhicule à moteur doté d'au moins une fonction de freinage pilotée électriquement, ce circuit incluant au moins un maître-cylindre, une pompe électrique, des premier et second moteurs de freins, des première et seconde électrovalves respectives, et une capacité à basse pression, cette capacité comprenant une chambre d'accumulation à volume variable reliée aux premier et second moteurs de freins à travers ces première et seconde électrovalves respectives par une entrée et délimitée dans un cylindre par un piston sollicité vers cette entrée au moyen d'un premier ressort développant une première force orientée dans un sens propre à réduire le volume de cette chambre jusqu'à une valeur minimale, cette capacité étant dotée d'un organe d'obturation sélectivement appliqué dans une première position par le premier ressort agissant sur cet organe par l'intermédiaire du piston lorsque le volume de la chambre d'accumulation est au voisinage de sa valeur minimale, et appliqué dans une seconde position par un second ressort agissant à l'encontre du premier et développant une seconde force inférieure à la première, lorsque le volume de la chambre d'accumulation est sensiblement supérieur à sa valeur minimale, et l'entrée de la chambre d'accumulation étant reliée à l'entrée de la pompe.

Des circuits hydrauliques de ce type sont connus depuis longtemps et équipent des véhicules dotés d'une fonction de freinage avec antiblocage et antipatinage des roues.

En particulier, un circuit de ce type est décrit dans le document EP-A-0 539 899.

Un problème classiquement rencontré dans la conception des circuits de ce type concerne la réduction de leur degré de complexité, en vue notamment d'une diminution de leur coût et d'une augmentation de leur fiabilité.

En particulier, la réduction du nombre d'organes actifs, tels que les électrovalves, ou d'organes de structure complexe, tels que les distributeurs à tiroirs, constitue un objectif permanent dans la conception de nouveaux circuits de freinage dotés d'au moins une fonction de freinage pilotée électriquement.

La présente invention se situe dans ce contexte et se propose de réaliser la fonction d'antipatinage de roues dans ce circuit hydraulique de freinage sans l'ajout d'aucun élement actif.

Plus précisément, le circuit hydraulique de l'invention est essentiellement caractérisé en ce que la capacité comprend en outre une chambre d'accès présentant des première et seconde entrées ainsi qu'une sortie communiquant avec l'entrée de la chambre d'accumulation, en ce que l'organe d'obturation est disposé dans la chambre d'accès pour en obturer sélectivement la première entrée dans sa première position et la sortie dans sa seconde position, en ce que la seconde entrée de la chambre d'accès est en communication permanente avec l'intérieur de cette chambre et reliée à la sortie du maître-cylindre, et en ce que la première entrée de la chambre d'accès est reliée d'une part à la sortie de la pompe et d'autre part à l'entrée des premier et second moteurs de freins, à travers les première et seconde électrovalves.

Grâce à cet arrangement, la chambre d'accumulation constitue une véritable mémoire d'état pour le circuit hydraulique, directement utilisable par le distributeur simplifié que constitue la chambre d'accès.

Dans une application préférée des caractéristiques essentielles précédemment énoncées, la sortie de la chambre d'accès présente une section d'obturation inférieure à la section du piston et la première entrée de la chambre d'accès présente une section d'obturation inférieure à celle de la sortie de cette chambre.

Par ailleurs, la sortie du maître-cylindre peut être reliée au second moteur de frein à travers un clapet anti-retour passant en direction du maître-cylindre.

Enfin, il est possible de prévoir que la sortie du maître-cylindre soit reliée à la première entrée de la chambre d'accès par un clapet anti-retour passant en direction de cette première entrée.

D'autres caractéristiques et avantages de l'invention ressortiront clairement de la description qui en est faite ci-après, à titre indicatif et nullement limitatif, en référence aux dessins annexés, dans lesquels :
- la Figure 1 est un schéma représentant un circuit complet conforme à l'invention ; et
- la Figure 2 est une vue détaillée d'un mode de réalisation particulier d'une capacité destinée à être intégrée à un circuit conforme à l'invention.

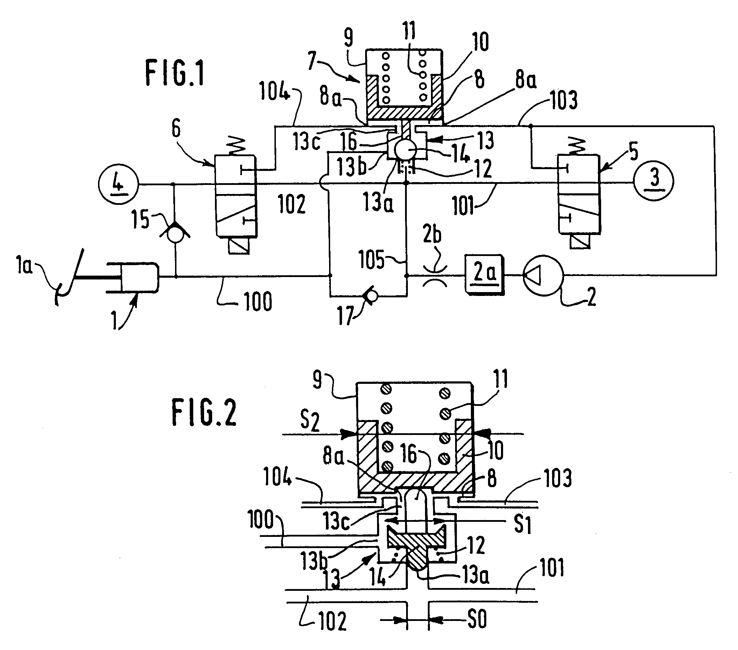

L'invention concerne un circuit hydraulique de freinage, destiné à équiper un véhicule à moteur doté d'au moins une fonction de freinage pilotée électriquement, et incluant au moins (Figure 1) un maître-cylindre 1, une pompe électrique 2, des premier et second moteurs de freins 3 et 4, des première et seconde électrovalves respectives 5 et 6, et une capacité à basse pression 7.

Ces éléments se trouvent reliés par des conduits hydrauliques tels que 100, 101, 102, 103, 104, et 105, l'ensemble de ces éléments et des conduits formant le circuit en question.

Plus précisément, le maître-cylindre 1, susceptible d'être actionné par une pédale de frein la, est relié au moteur de frein avant 3 et au moteur de frein arrière 4 par l'intermédiaire de conduits 100, 101 et 102, à travers les électrovalves respectives 5 et 6.

A l'état de repos, ces électrovalves font communiquer directement ces conduits 101 et 102 avec les moteurs de freins 3 et 4, comme représenté sur la figure 1.

La sortie de la pompe 2 est elle-même reliée aux deux conduits 101 et 102 à travers un volume tampon 2a, une restriction 2b, et le conduit 105, tandis que l'entrée de la pompe 2 est reliée à une entrée 8a d'une chambre d'accumulation à volume variable 8 de la capacité 7, laquelle est susceptible à son tour d'être sélectivement reliée aux moteurs de freins 3 et 4 à travers des conduits respectifs 103 et 104, par l'intermédiaire des électrovalves 5 et 6.

La chambre d'accumulation 8 est délimitée dans un cylindre 9 de cette capacité par un piston 10 sollicité vers l'entrée 8a au moyen d'un premier ressort 11 qui développe une première force orientée dans un sens propre à réduire le volume de cette chambre jusqu'à une valeur minimale éventuellement nulle.

Selon l'invention, la capacité 7 comprend par ailleurs une chambre d'accès 13 présentant des première et seconde entrées 13a, 13b ainsi qu'une sortie 13c communiquant avec l'entrée 8a de la chambre d'accumulation 8.

Un organe d'obturation 14, mobile entre des première et seconde positions extrêmes, est disposé dans la chambre d'accès 13 pour en obturer la première entrée 13a dans sa première position (celle qui est représentée sur la figure) et pour obturer la sortie 13c dans sa seconde position.

Comme le montrent les figures, l'organe d'obturation 14 est sélectivement appliqué dans sa première position par le premier ressort 11 qui le repousse, lorsque le volume de la chambre d'accumulation 13 est au voisinage de sa valeur minimale, par l'intermédiaire du piston 11 et éventuellement d'un doigt 16 solidaire de ce piston (figure 1) ou de l'organe d'obturation 14 (figure 2).

Lorsque le volume de la chambre d'accumulation 13 est sensiblement supérieur à sa valeur minimale, l'organe d'obturation 14 est au contraire appliqué dans sa seconde position par un second ressort 12 qui agit à l'encontre du premier ressort 11 et qui développe une seconde force inférieure à la première.

La seconde entrée 13b de la chambre d'accès 13, qui est reliée au maître-cylindre 1, est quant à elle en communication permanente avec l'intérieur de cette chambre d'accès.

En l'absence des éléments 12 à 14, correspondant à une libre communication des conduits 100, 101, 102 et 105, le circuit décrit permet par exemple d'assurer, de façon connue en soi, un freinage avec antiblocage de roues sur les roues avant et arrière, correspondant aux moteurs de freins respectifs 3 et 4.

Plus précisément, le freinage normal est réalisé par une élévation de la pression de fluide hydraulique dans les conduits 100, 101 et 102, résultant de l'actionnement du maître-cylindre 1 par le conducteur, et se propageant à travers les électrovalves 5 et 6, alors dans leur état de repos telle que représentée sur la figure 1. Le freinage automatique, dans une séquence d'antiblocage, est assuré par la pompe à travers le conduit 105 et à travers les électrovalves dans leur état de repos. Enfin, le défreinage automatique dans une séquence d'antiblocage est assuré par une excitation sélective des électrovalves et par la mise en communication des moteurs de freins concernés avec la capacité 7.

La simple adjonction des éléments 12 à 14, conformément à l'invention, permet l'apparition d'une fonction de freinage supplémentaire, par exemple un freinage avec antipatinage de la roue avant contrôlée par le moteur de frein 3.

Le fonctionnement du circuit complet est le suivant.

Dans le cas d'un freinage normal par le conducteur, l'élévation de la pression dans le conduit 100 provoque un déplacement du piston 10 à l'encontre de la force exercée par le ressort 11.

Dans la mesure où le doigt 16 libère alors l'organe d'obturation 14, ce dernier vient fermer la sortie 13c de la chambre d'accès 13 sous l'effet du second ressort 12, et ouvre la première entrée 13a. Dans ces conditions, le maître-cylindre est mis en communication, à travers les électrovalves 5 et 6, avec les moteurs de freins 3 et 4, qu'il actionne.

Grâce à l'invention, il est cependant possible, même en l'absence de toute action de la part du conducteur, de provoquer par exemple l'actionnement du moteur de frein 3, pour éviter le patinage de la roue avant contrôlée par ce moteur de frein.

A cette fin, il suffit en effet de mettre la pompe 2 en marche en excitant la seconde électrovalve 6 et en laissant la première électrovalve 5 au repos. Dans ces conditions, la pompe aspire en priorité le fluide éventuellement présent dans la chambre d'accumulation 8, puis le fluide présent dans le maître-cylindre, qui circule à travers le conduit 100, la seconde entrée 13b de la chambre d'accès 13, la sortie 13c de cette chambre, et le conduit 103.

Le fluide refoulé par la pompe atteint le moteur de frein 3 à travers les conduits 105 et 101, mais retourne dans la chambre d'accumulation 8 à travers la première entrée 13a de la chambre d'accès si la pression de ce fluide lui permet de vaincre les forces qui s'exercent sur l'organe d'obturation 14 dans le sens de la fermeture de la première entrée 13a, la pression de la pompe se trouvant ainsi régulée.

Le fonctionnement décrit est modulé par des paramètres qui sont avantageusement choisis de la façon suivante.

La sortie 13c de la chambre d'accès peut présenter, pour l'organe d'obturation 14, une section d'obturation S1 inférieure à la section S2 du piston 10, par exemple de l'ordre du tiers, mais de préférence sensiblement supérieure à la section d'obturation So de la première entrée 13a de cette chambre, la section S1 étant par exemple de l'ordre d'au moins dix fois So.

Par ailleurs, la sortie du maître-cylindre 1 est avantageusement reliée au second moteur de frein 4 à travers un clapet anti-retour 15, monté passant en direction du maître-cylindre, de manière à permettre le retour du premier moteur de frein 3 à son état de repos après cessation des conditions requérant son actionnement par la pompe 2.

Enfin, il est également possible de relier le conduit 100 au conduit 105 par un clapet anti-retour 17, passant en direction du conduit 105, pour disposer d'une voie de circulation de fluide supplémentaire entre le maître-cylindre 1 et les moteurs de frein, s'ajoutant à celle qui traverse la chambre d'accès 13.

## Revendications

1. Circuit hydraulique de freinage, destiné à équiper un véhicule à moteur doté d'au moins une fonction de freinage pilotée électriquement, ce circuit incluant au moins un maître-cylindre (1), une pompe électrique (2), des premier et second moteurs de freins (3, 4), des première et seconde électrovalves respectives (5, 6), et une capacité à basse pression (7), cette capacité comprenant une chambre d'accumulation à volume variable (8) reliée aux premier et second moteurs de frein (3, 4) à travers ces premiere et seconde électrovalves (5, 6) respectives par une entrée (8a) et délimitée dans un cylindre (9) par un piston (10) sollicité vers cette entrée au moyen d'un premier ressort (11) développant une première force orientée dans un sens propre à réduire le volume de cette chambre jusqu'à une valeur minimale, cette capacité étant dotée d'un organe d'obturation (14) sélectivement appliqué dans une première position par le premier ressort (11) agissant sur cet organe par l'intermédiaire du piston (10) lorsque le volume de la chambre d'accumulation est au voisinage de sa valeur minimale, et appliqué dans une seconde position par un second ressort (12) agissant à l'encontre du premier et développant une seconde force inférieure à la première, lorsque le volume de la chambre d'accumulation est sensiblement supérieur à sa valeur minimale, et l'entrée (8a) de la chambre d'accumulation étant reliée à l'entrée de la pompe (2), caractérisé en ce que la capacité comprend en outre une chambre d'accès (13) présentant des première et seconde entrées (13a, 13b) ainsi qu'une sortie (13c) communiquant avec l'entrée (8a) de la chambre d'accumulation, en ce que l'organe d'obturation (14) est disposé dans la chambre d'accès pour en obturer sélectivement la première entrée (13a) dans sa première position et la sortie (13c) dans sa seconde position, en ce que la seconde entrée (13b) de la chambre d'accès est en communication permanente avec l'intérieur de cette chambre et reliée à la sortie du maître-cylindre, et en ce que la première entrée (13a) de la chambre d'accès est reliée d'une part à la sortie de la pompe (2) et d'autre part à l'entrée des premier et second moteurs de freins (3, 4), à travers les première et seconde électrovalves (5, 6).

2. Circuit hydraulique suivant la revendication 1, caractérisé en ce que la sortie de la chambre d'accès présente une section d'obturation (S1) inférieure à la section (S2) du piston.

3. Circuit hydraulique suivant la revendication 2, caractérisé en ce que la première entrée de la chambre d'accès présente une section d'obturation (So) inférieure à celle (S1) de la sortie de cette chambre.

4. Circuit hydraulique suivant la revendication 3, caractérisé en ce que la sortie du maître-cylindre (1) est reliée au second moteur de frein (4) à travers un clapet anti-retour (15) passant en direction du maître-cylindre.

5. Circuit hydraulique suivant la revendication 4, caractérisé en ce que la sortie du maître-cylindre (1) est reliée à la première entrée (13a) de la chambre d'accès par un clapet anti-retour (17) passant en direction de cette première entrée (13a).

## Claims

1. Hydraulic brake circuit intended to equip a motor vehicle provided with at least an electrically pilot-controlled braking function, this circuit including at least a master cylinder (1), an electric pump (2), first and second brake motors (3, 4), first and second respective solenoid valves (5, 6), and a low-pressure capacity (7), this capacity comprising a variable-volume accumulation chamber (8) connected to the remainder of the circuit by an inlet (8a) and defined within a cylinder (9) by a piston (10) which is stressed towards this inlet by means of a first spring (11) generating a first force acting in a direction which is capable of reducing the volume of this chamber to a minimum value, this capacity being provided with a sealing member (14) selectively placed in a first position by the first spring (11) acting on this member by means of the piston (10) when the volume of the accumulation chamber is close to its minimum value, and placed in a second position by a second spring (12) acting counter to the first spring and generating a second force which is smaller than the first force, when the volume of the accumulation chamber is substantially greater than its minimum value, and characterized in that the capacity furthermore comprises an access chamber (13) having first and second inlets (13a, 13b) and an outlet (13c) communicating with the inlet (8a) of the accumulation chamber, in that a sealing member (14), is arranged in the access chamber in order selectively to seal the first inlet (13a) of the access chamber in its first position, and the outlet (13c) of the access chamber in its second position, in that the second inlet (13b) of the access chamber is in permanent communication with the inside of this chamber and connected to the outlet of the master cylinder, and in that the first inlet (13a) of the access chamber is connected to the outlet of the pump (2), on the one hand, and at least to the inlet of the first brake motor (3) on the other hand, via the first solenoid valve (5).

2. Hydraulic circuit according to Claim 1, characterized in that the outlet of the access chamber has a sealing cross section (S1) which is smaller than the cross section (S2) of the piston.

3. Hydraulic circuit according to Claim 2, characterized in that the first inlet of the access chamber has a sealing cross section (So) which is smaller than that (S1) of the outlet of this chamber.

4. Hydraulic circuit according to Claim 3, characterized in that the outlet of the master cylinder (1) is connected to the second brake motor (4) via a non-return valve (15) which allows flow towards the master cylinder [sic].

5. Hydraulic circuit according to Claim 4, characterized in that the outlet of the master cylinder (1) is connected to the first inlet (13a) of the access chamber by a non-return valve (17) allowing flow towards this first inlet (13a).

## Patentansprüche

1. Hydraulischer Bremskreis für ein Kraftfahrzeug, das mit wenigstens einer elektrisch gesteuerten Bremsfunktion versehen ist, wobei dieser Kreis wenigstens einen Hauptzylinder (1) aufweist sowie eine elektrische Pumpe (2), eine erste und eine zweite Bremsbetätigungsvorrichtung (3, 4), ein erstes und ein zweites Elektroventil (5 bzw. 6) und einen Niederdruckspeicher (7), wobei dieser Speicher eine Sammelkammer (8) mit variablem Volumen aufweist, die mit der ersten und der zweiten Bremsbetätigungsvorrichtung (3, 4) durch das erste bzw. das zweite Elektroventil (5 bzw. 6) über einen Eingang (8a) verbunden ist und in einem Zylinder (9) durch einen Kolben (10) abgegrenzt ist, der zu diesem Eingang mittels einer ersten Feder (11) beaufschlagt ist, die eine erste Kraft entwickelt, die in einer Richtung ausgerichtet ist, die geeignet ist, das Volumen dieser Kammer bis auf einen Minimalwert zu vermindern, wobei dieser Speicher mit einem Verschlußorgan (14) versehen ist, das selektiv in eine erste Stellung von der ersten Feder (11) gebracht wird, die auf dieses Organ über den Kolben (10) einwirkt, wenn das Volumen der Sammelkammer in der Nähe ihres minimalen Werts ist, und in eine zweite Stellung durch eine zweite Feder (12) gebracht ist, die der ersten entgegenwirkt und eine zweite Kraft, die kleiner als die erste ist, entwickelt, wenn das Volumen der Sammelkammer merklich größer als ihr minimaler Wert ist, und wobei der Eingang (8a) der Sammelkammer mit dem Eingang der Pumpe (2) verbunden ist, dadurch gekennzeichnet, daß der Speicher außerdem eine Zugangskammer (13) aufweist, die mit einem ersten und einem zweiten Eingang (13a, 13b) sowie einem Ausgang (13c) versehen ist, der mit dem Eingang (8a) der Sammelkammer verbunden ist, daß das Verschlußorgan (14) in der Zugangskammer angeordnet ist, um selektiv in seiner ersten Stellung den ersten Eingang (13a) und in seiner zweiten Stellung den Ausgang (13c) zu verschließen, daß der zweite Eingang (13b) der Zugangskammer permanent mit dem Inneren dieser Kammer in Verbindung steht und mit dem Ausgang des Hauptzylinders verbunden ist und daß der erste Eingang (13a) der Zugangskammer zum einen mit dem Ausgang der Pumpe (2) und zum anderen über das erste und das zweite Elektroventil (5, 6) mit dem Eingang der ersten und der zweiten Bremsbetätigungsvorrichtung (3, 4) verbunden ist.

2. Hydraulikkreis nach Anspruch 1, dadurch gekennzeichnet, daß der Ausgang der Zugangskammer einen Verschlußquerschnitt (S1) aufweist, der kleiner als der Querschnitt (S2) des Kolbens ist.

3. Hydraulikkreis nach Anspruch 2, dadurch gekennzeichnet, daß der erste Eingang der Zugangskammer einen Verschlußquerschnitt (So) aufweist, der kleiner als derjenige (S1) des Ausgangs dieser Kammer ist.

4. Hydraulikkreis nach Anspruch 3, dadurch gekennzeichnet, daß der Ausgang des Hauptzylinders (1) mit der zweiten Bremsbetätigungsvorrichtung (4) über ein Rückschlagventil (15) verbunden ist, das in Richtung des Hauptzylinders durchlässig ist.

5. Hydraulikkreis nach Anspruch 4, dadurch gekennzeichnet, daß der Ausgang des Hauptzylinders (1) mit dem ersten Eingang (13a) der Zugangskammer durch ein Rückschlagventil (17) verbunden ist, das in Richtung dieses ersten Eingangs (13a) durchlässig ist.
